# FASCICULE DE BREVET EUROPEEN

(11) **EP 0 574 314 B1**
(45) Date de publication et mention de la délivrance du brevet: **27.11.1996**
(21) Numéro de dépôt: 93401477.0
(22) Date de dépôt: 10.06.1993
(51) Int. Cl.: C04B 37/00, C04B 37/04, F01D 5/30, C03B 23/20, C03C 27/06

(54) **Procédé d'assemblage d'au moins deux pièces réalisées dans un matériau composite comprenant une matrice céramique ou vitrocéramique renforcée par des fibres céramiques**
Verfahren zum Verbinden von mindestens zwei Verbundkörpern, deren Matrizen aus mit keramischen Fasern verstärkten, keramischen oder Glasskeramischen Material besteht
Method of joining at least two parts consisting of a composite material having a ceramic or glass ceramic matrix reinforced by ceramic fibres

(30) Priorité: 11.06.1992 FR 9207009
(43) Date de publication de la demande: 15.12.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Benoit, Joel Michel Daniel, F-77240 Cesson la Foret (FR); Bessenay, Gilles Jean-Michel, F-75017 Paris (FR); Gauthier, Gérard Philippe, F-91240 6 Saint Michel s/Orge (FR)

(56) Documents cités:
- EP-A- 0 244 993
- EP-A- 0 375 589
- GB-A- 1 090 721
- GB-A- 1 586 352
- LASER UND OPTOELECTRONIK vol. 22, no. 4, Août 1990, STUTTGART pages 75-79, XP137715 H.K. TöHNSHOFF ET AL 'Lasersweissen von technischer Keramik'

## Description

L'invention concerne un procédé d'assemblage d'au moins deux pièces réalisées dans un matériau composite comprenant une matrice céramique ou vitrocéramique, renforcée par des fibres céramiques. Les matériaux composites à matrices céramiques ou vitrocéramiques sont de plus en plus fréquemment utilisés dans la fabrication de pièces devant présenter simultanément une bonne résistance à des températures élevées et une faible masse. Ces matériaux sont notamment utilisés pour la réalisation de pièces se trouvant dans les zones chaudes d'un turbo-réacteur d'avion. Ces pièces sont par exemple, des volets de tuyère, des chemises ou des bras d'un canal de post-combustion, des viroles, des bras de carter d'échappement, des pales ou des plateformes de redresseurs d'un compresseur ou encore des pales et des pieds d'aubes mobiles.

Ces pièces soumises à des sollicitations de natures diverses peuvent se rompre, il est alors nécessaire de les réparer.

En outre, lors de la fabrication de pièces de grandes dimensions comme des viroles, il est souvent nécessaire de les sectoriser en éléments individuels de petites dimensions, compte tenu des limites des installations utilisées ou des procédés de fabrication, et de les assembler ensuite, (au lieu d'effectuer une fabrication globale de la pièce).

Le terme "procédé d'assemblage de deux pièces" couvre donc les deux cas qui viennent d'être cités, c'est-à-dire non seulement l'assemblage mais également la réparation de pièces.

L'assemblage de deux pièces (ou plus) réalisées dans les matériaux précités pose des problèmes si il est effectué par des moyens mécaniques classiques tels que des rivets, des boulons ou des vis. En effet, les assemblages mécaniques imposent le perçage des deux pièces à assembler. Or, les matériaux composites céramiques sont difficilement usinables du fait de leur grande dureté et/ou de la présence d'une couche de matériau anti-oxydation sur leur surface ou de tout autre revêtement destiné à protéger le matériau composite. Ce revêtement tend à s'écailler ou à se fendiller autour du perçage et de ce fait, ne joue plus son rôle de protection contre tout phénomène extérieur destructif.

En outre, lorsque le perçage est réalisé sur un matériau céramique renforcé par des fibres, il a pour effet de détruire un certain nombre de torons de fibres, ce qui diminue la résistance mécanique de la pièce au niveau de ce perçage.

Enfin, la présence d'éléments métalliques tels que les boulons ou les vis à l'intérieur de la pièce en matériau composite, induit des différences de dilatation thermique qui sont nuisibles à l'intégrité de l'ensemble. Il est donc souhaitable d'assembler les pièces en matériau composite à l'aide d'un matériau de même nature.

On connaît déjà d'après le document US-A-4 353 966, un procédé de liaison d'objets réalisés dans un matériau composite à base d'une matrice de verre renforcée par des fibres de carbone. Ce procédé consiste à appliquer à la surface d'au moins l'un des deux objets à assembler, un mélange de verre à faible point de ramollissement et d'un matériau à haut point de ramollissement et à faible coefficient de dilatation thermique. Ensuite, les deux objets sont assemblés et on effectue une compaction à chaud.

On connaît également d'après le document US-A-4 724 020, un procédé d'assemblage d'éléments céramiques par chauffage puis par application d'une haute tension électrique. Plus précisément, deux torches sont disposées de part et d'autre des éléments à assembler et la ligne de contact entre les deux éléments est chauffée à l'aide de ces torches. Ensuite, on applique, entre ces deux torches, une tension comprise entre 1000 et 10 000 volts. Ce procédé est applicable aux céramiques conductrices d'électricité à haute température.

Enfin, on connaît d'après le document US-A-4 156 051, un procédé de fabrication de pièces de formes complexes en céramique. Ces pièces sont par exemple les différents éléments d'un rotor de turbine. Ce procédé consiste à réaliser une pluralité d'éléments constitutifs de la pièce finale, par moulage d'un matériau céramique tel que le nitrure de silicium, le nitrure d'aluminium ou le carbure de silicium, chaque élément ayant une densité supérieure à 98% de la valeur théorique et une résistance à la flexion importante. Ces éléments sont ensuite assemblés directement les uns aux autres sans matière étrangère intermédiaire, par compaction à chaud. La résistance à la flexion des parties jointes est égale à celle des autres parties de la pièce.

Ces divers procédés ne sont toutefois absolument pas adaptés à l'assemblage de pièces comprenant des renforts en fibres céramiques. En effet, lors de l'assemblage, il est préférable de conserver la continuité du matériau au niveau de sa liaison, pour des raisons de résistance spécifique.

En conséquence, l'invention a pour objet un procédé d'assemblage d'au moins deux pièces réalisées dans un matériau composite comprenant une matrice céramique ou vitrocéramique renforcée par des fibres céramiques.

Selon les caractéristiques de l'invention, ce procédé comprend les étapes consistant à :
- approcher deux des pièces le long de leurs bords respectifs à assembler,
- réaliser un joint entre ces deux pièces, par couture avec un lien, des fibres céramiques provenant de chacune des pièces à assembler, et
- chauffer ce joint par des moyens permettant un chauffage puissant et extrêmement localisé, jusqu'à souder les deux pièces entre elles.

En outre, il est possible de réaliser le joint entre les deux pièces en déposant de la poudre d'un matériau d'apport céramique ou vitrocéramique autour des fibres cousues.

Ce mode de réalisation s'applique notamment au cas d'une réparation de deux fragments provenant d'une pièce rompue, dans lequel chaque fragment présente encore à son extrémité libre rompue de façon irrégulière, des morceaux de fibres céramiques. Il est alors possible de coudre ces fibres et de réaliser un joint dans le même matériau que la pièce.

Le joint présentant des fibres céramiques, conserve la continuité du matériau au niveau de la liaison des deux pièces.

De façon avantageuse, les fibres de céramique sont choisies parmi les fibres d'alumine ou de carbure de silicium.

De préférence, le matériau formant la matrice céramique ou vitrocéramique se présente sous forme de poudre et est choisi parmi les verres céramisables du type alumino-silicate de lithium, alumino-silicate de magnésium, alumino-silicate de lithium et de magnésium, alumino-silicate de calcium ou alumino-silicate de magnésium et de baryum.

L'invention sera mieux comprise à la lecture de la description suivante d'un mode de réalisation de l'invention donnée à titre d'exemple purement illustratif et non limitatif, cette description étant faite en faisant référence aux dessins joints, dans lesquels :
- la figure 1 est un schéma illustrant deux pièces avant leur assemblage,
- les figures 2 et 3 sont des schémas illustrant diverses variantes de réalisation de l'invention, et
- les figures 4, 5 et 6 illustrent de façon schématique diverses techniques de chauffage utilisées dans le procédé selon l'invention.

Le procédé d'assemblage selon l'invention est spécifiquement destiné à assembler des pièces réalisées dans un matériau composite comprenant une matrice céramique ou vitrocéramique renforcée par des fibres céramiques. Les matériaux utilisés sont avantageusement sous forme de poudre, à laquelle on ajoute des liants qui permettent de maintenir ladite poudre et de donner une consistance à l'ensemble.

Les matrices céramiques ou vitrocéramiques sont choisies par exemple parmi les matériaux cités dans l'introduction.

Les fibres céramiques permettant le renfort de ces matériaux sont par exemple des fibres de carbure de silicium (SiC) ou des fibres d'alumine (Al₂O₃).

Les pièces à assembler peuvent être constituées par des matériaux en composite céramique/céramique de même nature ou de nature différente.

En outre, l'architecture des fibres de chaque pièce peut être identique ou différente. A titre d'exemple, elle peut être composée de nappes unidirectionnelles 0°/0°, ce qui signifie qu'une fois les deux pièces assemblées, leurs fibres respectives sont parallèles entre elles. L'orientation peut être également de 0°/90°, ce qui signifie que les fibres des deux pièces à assembler sont perpendiculaires entre elles, on peut également avoir une orientation de 45°/45°, pour ne citer que les exemples d'orientation les plus fréquents.

Par ailleurs, l'empilement des nappes unidirectionnelles peut conjuguer les différentes orientations possibles.

D'autres architectures de fibres peuvent être employées, les plus connues sont les tissus et les textures 2,5 D. Contrairement aux nappes unidirectionnelles en plan, les tissus sont formés de fibres tissées entre elles. Parmi les tissus, on peut utiliser par exemple, le taffetas, le satin, le sergé ou le tissu déséquilibré. Ces tissus ont différents avantages, en fonction de l'orientation des fibres qui les constituent. Le taffetas est plus facile à manipuler et le satin se déforme plus facilement ce qui permet de l'utiliser pour la réalisation de pièces de forme. Enfin, on peut également orienter ces textures de manière à augmenter le nombre de fibres dans la direction où les sollicitations sont les plus importantes.

Les textures 2,5 D sont par exemple des tissus en deux dimensions (2 D) avec un fil de liaison dans la troisième direction pour assurer une plus grande résistance encore à l'ensemble et principalement une liaison entre strates, évitant les délaminages.

Le procédé selon l'invention consiste de manière générale à approcher les deux pièces à assembler ou à réparer, le long de leurs bords respectifs à assembler, à réaliser entre elles un joint comprenant des fibres céramiques, de façon à assurer la continuité des deux pièces et à chauffer le joint ainsi réalisé par des moyens permettant un chauffage puissant et extrêmement localisé, jusqu'à souder les deux pièces entre elles.

Le joint comprenant des fibres céramiques peut être réalisé de plusieurs façons.

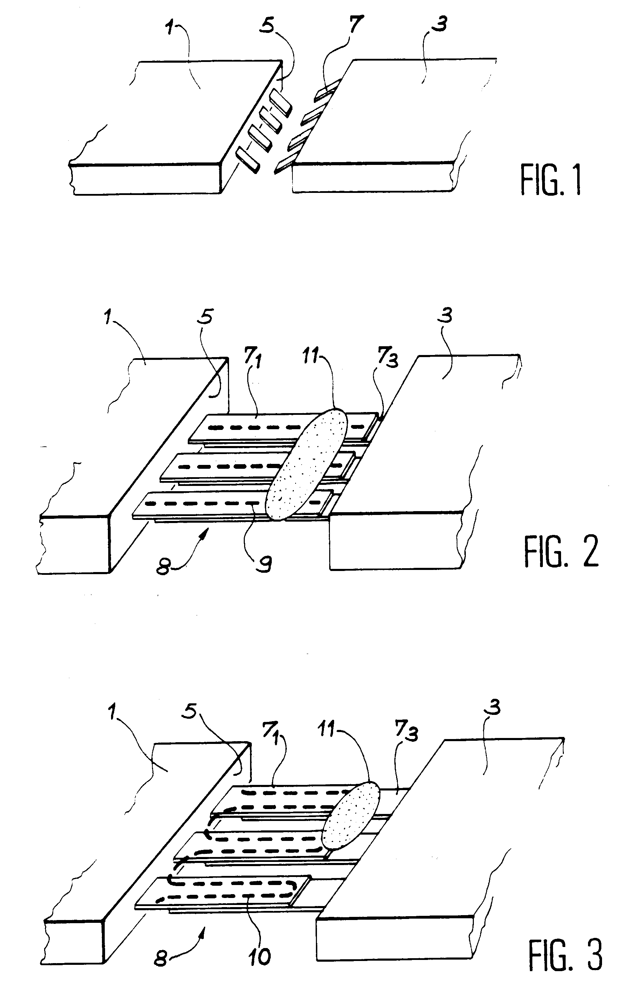

La figure 1 illustre deux pièces 1 et 3 à assembler. Ces deux pièces 1 et 3 présentent au niveau de leurs bords respectifs 5 à assembler des fragments de fibres de céramique 7. Ces fibres ont été représentées de façon arbitraire selon une orientation 45°/45°.

Un premier mode de réalisation du joint entre ces deux pièces est illustré en figure 2. Les deux pièces 1 et 3 présentent respectivement des fibres 7₁ et 7₃ dépassant de leur bord 5 à assembler. Les deux pièces 1 et 3 sont rapprochées de façon à ce que les fibres 7₁ dépassant de la pièce 1 recouvrent les fibres 7₃ dépassant de la pièce 3, par exemple. Le joint 8 entre les deux pièces est ensuite effectué par simple couture des fibres 7₁ et 7₃ ou plus précisément par piquage, à l'aide d'un lien 9. Le piquage assure le maintien des fibres 7₁, 7₃ dans l'épaisseur. De préférence, ce lien 9 est réalisé dans une fibre de même nature que celles utilisées dans les matrices des pièces 1 et 3.

Dans une première variante du premier mode de réalisation du joint, un chauffage localisé est alors directement effectué sur la matrice vitrocéramique des pièces 1 et 3 qui par refusion forment un joint entre-elles.

Dans une seconde variante du premier mode de réalisation, on ajoute en outre, de part et d'autre de la couture ainsi réalisée, une certaine quantité de poudre d'un matériau d'apport 11 céramique ou vitrocéramique, et on effectue une refonte locale à l'aide de moyens de chauffage qui seront décrits ultérieurement, de façon à former le joint 8 entre les deux pièces 1 et 3. Le matériau d'apport 11 est avantageusement de même nature que la matrice céramique ou vitrocéramique utilisée pour fabriquer les pièces 1 et 3 assemblées (voir notamment les exemples précédemment cités). Ce matériau d'apport 11 est utilisé lorsque le jeu à combler entre les deux pièces 1 et 3 est important sinon il n'est pas absolument nécessaire.

La figure 3 illustre un second mode de réalisation du joint entre les pièces 1 et 3. Dans une première variante de ce second mode de réalisation de l'invention, les deux pièces sont également assemblées par couture de leurs fibres 7₁ et 7₃. Toutefois, on utilise dans ce cas comme lien, une fibre longue continue 10 traversant les fibres 7₁ et 7₃ non seulement en épaisseur, c'est-à-dire perpendiculairement aux fibres 7₁, 7₃, mais également dans le plan du joint 8, c'est-à-dire le plan des fibres 7₁, 7₃. Cette fibre longue 10 est de préférence réalisée dans un matériau de même nature que celui utilisé pour les fibres des matrices. On applique ensuite un chauffage localisé sur ces fibres et les extrémités des pièces 1 et 3 pour former le joint 8. Dans une seconde variante de ce second mode de réalisation, on dépose ensuite sur les fibres 7₁ et 7₃, une couche de matériau d'apport 11 comme cela a été décrit précédemment pour la figure 2. On forme ainsi le joint 8.

Les moyens de chauffage utilisés doivent permettre d'introduire une très grande quantité d'énergie dans un faible volume, afin d'obtenir de façon très localisée, une refusion du matériau d'apport et une rediffusion vers le matériau de la matrice constituant les pièces.

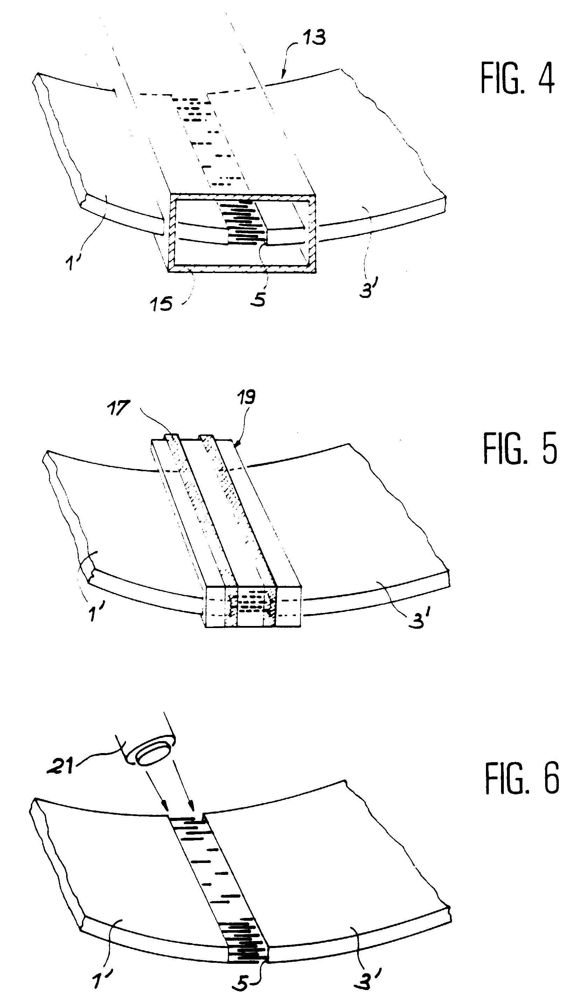

Parmi ces moyens de chauffage, on peut citer par exemple, le chauffage par micro-ondes à l'aide d'une cavité résonnante de 2,45 GHz (voir figure 4), le chauffage par induction, généralement avec un suscepteur (voir figure 5), le chauffage par des lampes à infrarouge (non représenté) ou le traitement de surface au faisceau laser (voir figure 6). Les moyens de chauffage seront choisis en fonction de la géométrie des pièces et de la nature des joints à réaliser.

Comme illustré en figure 4, deux pièces 1' et 3' d'une virole 13 sont assemblées dans une cavité de résonnance 15. La technique d'assemblage des fibres est celle utilisée aux figures 2 et 3.

La figure 5 est similaire à la figure 4, si ce n'est que le chauffage est réalisé à l'aide d'un inducteur 17 et d'un suscepteur 19.

Enfin, la figure 6 illustre le chauffage des deux pièces 1' et 3' réalisé par un faisceau laser 21.

L'utilisation de ces moyens de chauffage très localisé permet de ne pas avoir à introduire d'agents fondants dans le matériau d'apport, ce qui abaisserait la température de fusion par un traitement global par exemple. Au contraire, on peut se servir comme matériau d'apport d'une matière identique à celle utilisée pour la réalisation des pièces. L'intérêt principal de la technique de l'invention est de ne pas limiter la température d'utilisation de l'assemblage, à la température de fusion d'un matériau d'apport avec agents fondants (plus basse que celle de la matrice d'origine). Ce type de chauffage localisé permet de travailler même sur des pièces comprenant des composants métalliques ou des éléments composites dont la température de fusion est inférieure à celle du matériau principal.

Enfin, on notera que si l'on a toujours décrit l'assemblage de deux pièces, il est également possible d'en assembler un plus grand nombre simultanément.

## Revendications

1. Procédé d'assemblage d'au moins deux pièces (1, 1' ; 3, 3') réalisées dans un matériau composite comprenant une matrice céramique ou vitrocéramique renforcée par des fibres céramiques, caractérisé en ce qu'il comprend les étapes consistant à :
- approcher deux des pièces (1; 1' ; 3, 3') le long de leurs bords respectifs (5) à assembler,
- réaliser un joint (8) entre ces deux pièces, par couture avec un lien (9, 10), des fibres céramiques 7₁, 7₃) provenant de chacune des pièces (1, 1' ; 3, 3') à assembler, et
- chauffer ce joint (8) par des moyens permettant un chauffage puissant et extrêmement localisé, jusqu'à souder les deux pièces (1, 1' ; 3, 3') entre elles.

2. Procédé d'assemblage selon la revendication 1, caractérisé en ce que la couture est réalisée par piquage à l'aide d'un lien (9) assurant le maintien des fibres (7₁, 7₃) dans l'épaisseur.

3. Procédé d'assemblage selon la revendication 1, caractérisé en ce que la couture est réalisée à l'aide d'un lien (10) assurant le maintien des fibres (7₁, 7₃) en épaisseur et dans le plan desdites fibres (7₁, 7₃).

4. Procédé d'assemblage selon la revendication 1, 2 ou 3, caractérisé en ce que l'on réalise le joint (8) entre les deux pièces (1, 1' ; 3, 3') en déposant de la poudre d'un matériau d'apport (11) céramique ou vitrocéramique autour des fibres (7₁,7₃) cousues.

5. Procédé d'assemblage selon la revendication 1, caractérisé en ce que le matériau formant la matrice céramique ou vitrocéramique est choisi parmi les verres céramisables du type alumino-silicate de lithium, alumino-silicate de magnésium, alumino-silicate de lithium et de magnésium, alumino-silicate de calcium ou alumino-silicate de magnésium et de baryum.

6. Procédé d'assemblage selon la revendication 4, caractérisé en ce que le matériau d'apport (11) est de même nature que le matériau utilisé pour former la matrice céramique ou vitrocéramique.

7. Procédé d'assemblage selon la revendication 1, caractérisé en ce que les fibres céramiques (7₁,7₃) sont choisies parmi les fibres d'alumine ou de carbure de silicium.

8. Procédé d'assemblage selon la revendication 2 ou 3, caractérisé en ce que le lien (9, 10) est réalisé dans un matériau de même nature que le matériau des fibres (7₁, 7₃) de la matrice céramique ou vitrocéramique.

9. Procédé d'assemblage selon la revendication 1, caractérisé en ce que les moyens de chauffage sont choisis parmi le chauffage par micro-ondes (15), l'induction (17, 19), les lampes à émission infrarouge ou le traitement de surface par faisceau laser (21).

## Patentansprüche

1. Verfahren zum Verbinden von mindestens zwei Verbundkörpern (1, 1'; 3, 3'), deren Matrix aus mit keramischen Fasern verstärktem keramischen oder glaskeramischen Material besteht,
dadurch gekennzeichnet,
daß es die Verfahrensschritte umfaßt, die darin bestehen:
- zwei der Verbundkörper (1, 1'; 3, 3') mit ihren zu verbindenden jeweiligen Kanten (5) aneinanderzusetzen,
- zwischen diesen beiden Verbundkörpern eine Nahtverbindung (8) mit einer Verbindung (9, 10) der keramischen Fasern (7₁, 7₃) herzustellen, die aus jedem der zu verbindenden Verbundkörper (1, 1'; 3, 3') hervorstehen, und
- diese Verbindung (8) mit Mitteln, die eine starke und lokal äußerst begrenzte Erwärmung ermöglichen, so weit zu erwärmen, daß die beiden Verbundkörper (1, 1'; 3, 3') aneinandergeschweißt werden.

2. Verfahren zum Verbinden nach Anspruch 1, dadurch gekennzeichnet, daß die Naht durch Durchnähen mittels eines Verbindungselements (9) hergestellt wird, welches den Halt der Fasern (7₁, 7₃) in der Dicke gewährleistet.

3. Verfahren zum Verbinden nach Anspruch 1, dadurch gekennzeichnet, daß die Naht mittels eines Verbindungselements (10) hergestellt wird, welches den Halt der Fasern (7₁, 7₃) in der Dicke und in der Ebene der genannten Fasern (7₁, 7₃) gewährleistet.

4. Verfahren zum Verbinden nach Anspruch 1, 2 oder 3, dadurch gekennzeichnet, daß die Verbindung (8) zwischen den beiden Verbundkörpern (1, 1'; 3, 3') hergestellt wird, indem das Pulver eines keramischen oder glaskeramischen Zugabematerials (11) um die genähten Fasern (7₁, 7₃) herum abgelagert wird.

5. Verfahren zum Verbinden nach Anspruch 1, dadurch gekennzeichnet, daß das Material, aus dem die keramische oder glaskeramische Matrix besteht, unter den keramisierbaren Gläsern wie Lithium-Aluminosilikat, Magnesium-Aluminosilikat, Lithium- und Magnesium-Aluminosilikat, Kalzium-Aluminosilikat oder Magnesium- und Barium-Aluminosilikat gewählt wird.

6. Verfahren zum Verbinden nach Anspruch 4, dadurch gekennzeichnet, daß das Zugabematerial (11) von der gleichen Art ist wie das Material, das zur Bildung der keramischen oder glaskeramischen Matrix verwendet wird.

7. Verfahren zum Verbinden nach Anspruch 1, dadurch gekennzeichnet, daß die keramischen Fasern (7₁, 7₃) unter den Aluminium- oder Siliziumkarbidfasern gewählt werden.

8. Verfahren zum Verbinden nach Anspruch 2 oder 3, dadurch gekennzeichnet, daß das Verbindungselement (9, 10) aus einem Material der gleichen Art wie das Material der Fasern (7₁, 7₃) der keramischen oder glaskeramischen Matrix hergestellt wird.

9. Verfahren zum Verbinden nach Anspruch 1, dadurch gekennzeichnet, daß die Heizmittel aus den Bereichen der Mikrowellen-Heizung (15), der Induktion (17, 19), der Lampen mit Infrarotstrahlung oder der Oberflächenbehandlung mit Laserstrahl (21) gewählt werden.

## Claims

1. A process for assembling at least two articles (1, 1'; 3, 3') made of a composite material comprising a ceramic fibre reinforced ceramic or vitroceramic matrix, characterise in that it comprises the following steps:
moving two of the articles (1, 1'; 3, 3') towards one another along their respective assembly edges (5);
making a joint (8) between the two articles by stitching together, with a connector (9, 10), ceramic fibres (7₁, 7₃) originating from each of the articles (1. 1'; 3, 3') to be assembled, and
heating the joint (8) by means providing powerful and very localized heating until the two articles (1, 1'; 3, 3') are welded together.

2. An assembly process according to claim 1, characterised in that the stitching is effected by needling with the use of a connector (9) providing thickness retention of the fibres (7₁, 7₃).

3. An assembly process according to claim 1, characterised in that the stitching is effected with the use of a connector (10) providing retention of the fibres (7₁, 7₃) in thickness and in their plane.

4. An assembly process according to claim 1 or 2 or 3, characterised in that the joint (8) between the two articles (1, 1'; 3, 3') is produced by depositing powder of a ceramic or vitroceramic make-up material (11) around the stitched fibres (7₁, 7₃).

5. An assembly process according to claim 1, characterised in that the material forming the ceramic or vitroceramic matrix is chosen from ceramisable glasses of the lithium alumino-silicate, magnesium alumino-silicate, lithium and magnesium alumino-silicate, calcium alumino-silicate or magnesium and barium alumino-silicate kind.

6. An assembly process according to claim 4, characterised in that the make-up material (11) is of the same kind as the material used to form the ceramic or vitroceramic matrix.

7. An assembly process according to claim 1, characterised in that the ceramic fibres (7₁ , 7₃) are chosen from alumina fibres or silicon carbide fibres.

8. An assembly process according to claim 2 or 3, characterised in that the connector (9, 10) is made of a material of the same kind as the material of the fibres (7₁, 7₃) of the ceramic or vitroceramic matrix.

9. An assembly process according to claim 1, characterised in that the heating means are chosen from heating by microwave (15), induction (17, 19), infrared lamps or surface treatment by laser beam (21).
